# EUROPEAN PATENT APPLICATION

(11) **EP 4 836 121 A1**
(43) Date of publication of application: **04.11.2026**
(21) Application number: 25173807.6
(22) Date of filing: 30.04.2025
(51) Int. Cl.: H01M 50/209, H01M 50/367, H01M 50/35

(54) **MULTI-LAYER TOP COVER FOR BATTERY PACK**

(71) Applicant: Ford Global Technologies, LLC, Dearborn, MI 48126 (US)
(72) Inventor: STOTHARD, Christopher, Billericay, CM11 2DR (GB); COX, David, London, SE16 5XJ (GB); PETRIDIS, Themi, Bishop's Stortford, CM23 3NG (GB); ETHERIDGE, Paul, Crowborough, TN6 2EA (GB)
(74) Representative: HG Law International LLP

(57) **Abstract**

The present disclosure provides a top cover for a battery pack and a battery pack, with the top cover configured to be attached to a battery pack which comprises a plurality of battery arrays and to substantially form the top cover of the battery arrays within the battery pack. The top cover comprises a first wall, a second wall, and a third wall, the first wall and the second wall are spaced away from one another to form a first hollow portion, and the second wall and the third wall are spaced away from one another to form a second hollow portion. The first wall forms at least a part of the top cover of each battery array of the plurality of battery arrays, the first wall comprises at least one vent ingress port and at least one vent outlet aperture which vents to atmosphere such that the first hollow portion provides a fluid flow path between the at least one vent ingress port and the at least one vent outlet aperture, and the second hollow portion is not in fluid communication with the first hollow portion.

## Description

### FIELD OF INVENTION

The present disclosure relates to battery systems for electric vehicles, and more particularly to a battery pack top cover design that integrates array covers to manage cell venting and thermal propagation.

### BACKGROUND

Battery systems for electric vehicles typically comprise multiple battery cells arranged in modules and packs to provide the required voltage and capacity.

Conventional battery pack designs often utilize separate module housings and pack enclosures. The module housings contain and protect groups of battery cells, while the pack enclosure provides overall structural support and environmental protection. This multi-layer approach to the battery system can be relatively heavy and complex.

If a cell experiences thermal runaway, it can vent hot gases and particles. Typical venting solutions involve dedicated vent channels and ports in the module and pack housings. There are also challenges in effectively directing vented gases away from other cells and electrical components.

### SUMMARY

This Summary is provided to introduce a selection of concepts in a simplified form that are further described below in the Detailed Description.

In a first aspect, a top cover for a battery pack is provided. The top cover is configured to be attached to a battery pack which comprises a plurality of battery arrays and to substantially form the top cover of the battery arrays within the battery pack. The top cover comprises a first wall, a second wall, and a third wall. The first wall and the second wall are spaced away from one another to form a first hollow portion, and the second wall and the third wall are spaced away from one another to form a second hollow portion. The first wall forms at least a part of the top cover of each battery array of the plurality of battery arrays. The first wall comprises at least one vent ingress port and at least one vent outlet aperture which vents to atmosphere such that the first hollow portion provides a fluid flow path between the at least one vent ingress port and the at least one vent outlet aperture. The second hollow portion is not in fluid communication with the first hollow portion.

This multi-layered top cover design provides effective management of gases from cells undergoing thermal runaway, isolating hot exhaust gases from sensitive battery components.

The at least one vent ingress port may pass through the second wall.

This configuration allows for controlled entry of vented gases into the first hollow portion, providing a clear path for gas flow while maintaining separation between the gas-containing space and other battery components.

The second wall may be shaped such that the first hollow portion is separated into multiple chambers.

Separating the first hollow portion into multiple chambers allows for more localized gas management, potentially limiting the spread of hot gases to specific regions of the battery pack.

The multiple chambers of the second hollow portion may not be in fluid communication with each other.

This feature further enhances the isolation of vented gases, preventing cross-contamination between different sections of the battery pack and potentially limiting the extent of thermal events.

Each chamber may be substantially aligned with a battery array.

Aligning chambers with specific battery arrays allows for targeted gas management, potentially improving the efficiency of gas venting and thermal management for individual arrays.

Each respective battery array may be in fluid communication with a respective chamber of the top cover.

This direct communication between arrays and chambers ensures that vented gases have a clear and dedicated path to escape, potentially reducing pressure buildup within individual arrays.

Each battery array may include a separate vent ingress port into the respective chamber of the top cover.

Providing separate vent ingress ports for each array allows for independent venting of individual arrays, potentially improving the overall gas management capabilities of the battery pack.

The second hollow portion may be configured to accommodate a busbar or wiring.

Utilizing the second hollow portion for busbars or wiring allows for efficient use of space within the battery pack.

The at least one vent ingress port may each comprise a burst region.

Including burst regions in the vent ingress ports may allow gases to enter the first hollow portion only when a certain pressure threshold is reached.

Each burst region may comprise a frangible portion.

The use of frangible portions in the burst regions ensures a predictable and reliable opening mechanism for gas venting.

The frangible portion may be configured to rupture at a pre-determined pressure level.

Configuring the frangible portion to rupture at a specific pressure level allows for precise control over when venting occurs, potentially preventing premature venting or excessive pressure buildup.

The at least one vent ingress port may comprise a one-way valve.

Incorporating one-way valves in the vent ingress ports prevents backflow of gases, ensuring that vented gases follow the intended path through the first hollow portion and out of the battery pack.

The opposing surfaces of the second wall and the third wall may be coated in a silicate mineral.

Coating the surfaces with a silicate mineral can provide additional thermal insulation and fire resistance.

In a second aspect, a battery pack is provided. The battery pack comprises the cover element of the first aspect and at least one battery array.

Integrating the top cover design with a battery pack creates a comprehensive system for managing thermal events and vented gases.

In a third aspect, a vehicle is provided. The vehicle comprises the battery pack of the second aspect.

### BRIEF DESCRIPTION OF FIGURES

Non-limiting and non-exhaustive examples are described with reference to the following figures.
FIG. 1A illustrates a battery pack including a top cover in accordance with that which is described herein;
FIG. 1B illustrates a battery pack including a partially-assembled top cover in accordance with that which is described herein;
FIG. 1C illustrates a partially-assembled battery pack including a top cover in accordance with that which is described herein;
FIG. 2 illustrates another battery pack including a top cover in accordance with that which is described herein;
FIG. 3 illustrates a further battery pack including a top cover in accordance with that which is described herein; and
FIG. 4 illustrates a vehicle which incorporates a battery pack including the busbar protection as described herein.

Common reference numerals are used throughout the figures to indicate similar features.

### DETAILED DESCRIPTION

The present disclosure relates to a top cover for a battery pack. The top cover is configured to be attached to a battery pack that comprises multiple battery arrays. The top cover substantially forms the top cover of the battery arrays within the battery pack.

The top cover includes multiple layers that create separate spaces or hollow portions. These hollow portions serve different purposes, with one hollow portion providing a pathway for venting gases from the battery arrays, while another hollow portion may be used for other components or purposes.

This multi-layered design offers several advantages in managing cell venting and thermal propagation within the battery pack. By providing a dedicated space for venting gases, the top cover helps to direct hot exhaust gases away from components and other battery arrays.

The top cover may be incorporated into various types of battery packs, including those used in electric vehicles. A battery pack comprising the disclosed top cover and at least one battery array may be installed in a vehicle.

The top cover includes a first wall that forms at least a part of the top cover for each battery array within the battery pack. This first wall serves a crucial role in managing gas flow within the battery pack.

The first wall includes at least one vent ingress port and at least one vent outlet aperture. The vent ingress port allows gases generated within the battery arrays to enter a space within the top cover. The vent outlet aperture provides a path for these gases to exit the top cover and vent to the atmosphere.

Between the vent ingress port and the vent outlet aperture, a first hollow portion is formed. This first hollow portion provides a fluid flow path that connects the vent ingress port to the vent outlet aperture. This arrangement allows gases from the battery arrays to enter through the vent ingress port, travel through the first hollow portion, and then exit through the vent outlet aperture.

By incorporating these features, the first wall of the top cover facilitates controlled venting of gases from the battery arrays. This design helps manage thermal events within the battery pack by providing a designated pathway for hot gases to be directed away from sensitive components and other battery arrays.

The top cover includes a second wall positioned relative to the first wall. The second wall and the first wall are spaced apart from each other, forming the first hollow portion between them. This arrangement creates a defined space within the top cover for gas flow.

In some examples, the second wall may be shaped to separate the first hollow portion into multiple chambers. This configuration can provide distinct pathways or compartments within the first hollow portion, potentially allowing for more controlled gas flow management within the top cover.

The second wall may include features that pass through it, such as vent ingress ports. These vent ingress ports can provide a pathway for gases to enter the first hollow portion from the battery arrays below. By positioning the vent ingress ports in the second wall, gases can be directed into specific areas of the first hollow portion.

In certain configurations, the multiple chambers created by the shaped second wall may not be in fluid communication with each other. This separation can allow for isolated gas flow paths within the first hollow portion, potentially corresponding to different sections or arrays of the battery pack.

The design of the second wall, including its shape and any features passing through it, can contribute to the overall gas management capabilities of the top cover. By creating multiple chambers and controlling the flow of gases through vent ingress ports, the second wall plays a role in directing and managing gases within the battery pack.

The top cover includes a third wall positioned relative to the second wall. The third wall and the second wall are spaced apart from each other, forming a second hollow portion between them. This second hollow portion is distinct and separate from the first hollow portion formed between the first and second walls.

The second hollow portion is not in fluid communication with the first hollow portion. This isolation ensures that the second hollow portion remains separate from the gas flow path provided by the first hollow portion. The separation of these two hollow portions allows for different functionalities within the top cover structure.

In some examples, the second hollow portion may be configured to accommodate various components of the battery pack. For instance, the second hollow portion may provide space for busbars or wiring. This arrangement allows for the integration of electrical components within the top cover structure while keeping them isolated from the gas flow path.

The opposing surfaces of the second wall and the third wall may be coated in a silicate mineral. This coating can provide additional protection or insulation for the components housed within the second hollow portion. The silicate mineral coating may also contribute to the overall thermal management capabilities of the top cover.

By incorporating this third wall and creating a separate second hollow portion, the top cover design allows for a multi-functional structure that can manage gas flow while also providing protected space for other battery pack components.

The top cover includes a first hollow portion formed between a first wall and a second wall. This first hollow portion serves as a crucial component in the gas management system of the battery pack. The first hollow portion provides a fluid flow path that connects vent ingress ports to vent outlet apertures, allowing for the controlled movement of gases generated within the battery arrays.

In some examples, the first hollow portion may be divided into multiple chambers. These chambers can be substantially aligned with individual battery arrays within the battery pack. This alignment allows for a more targeted approach to gas management, as each chamber can correspond to a specific battery array or group of arrays.

Each battery array may include a separate vent ingress port that leads into a respective chamber of the top cover. This configuration allows gases generated by a specific battery array to be directed into a designated chamber within the first hollow portion. By providing individual vent ingress ports for each battery array, the top cover can manage gas flow from multiple sources simultaneously.

The design of the first hollow portion ensures that each battery array is in fluid communication with a respective chamber of the top cover. This fluid communication allows gases generated by a battery array to flow freely into the corresponding chamber of the first hollow portion. From there, the gases can be directed along the fluid flow path towards the vent outlet apertures.

The structure of the first hollow portion, formed by the first and second walls, creates a dedicated space for gas flow within the top cover. This space is separate from other components of the battery pack, helping to isolate potentially hot or corrosive gases from electrical components. The design of the first hollow portion may contribute to the overall thermal management of the battery pack by providing a controlled pathway for gas venting.

The top cover includes a second hollow portion formed between the second wall and the third wall. This second hollow portion is distinct and separate from the first hollow portion, which is formed between the first wall and the second wall. The second hollow portion is not in fluid communication with the first hollow portion, ensuring complete isolation between these two spaces within the top cover structure.

The second hollow portion may be configured to accommodate various components of the battery pack. For example, the second hollow portion may provide space for busbars or wiring. This arrangement allows for the integration of electrical components within the top cover structure while keeping them isolated from the gas flow path in the first hollow portion.

In some examples, the space within the second hollow portion may be cooled by a fluid if the space is adequately sealed. This cooling feature can help manage the temperature of components housed within the second hollow portion, potentially improving the overall thermal management of the battery pack.

The opposing surfaces of the second wall and the third wall may be coated with a silicate mineral. This coating can provide additional protection or insulation for the components housed within the second hollow portion. The silicate mineral coating may also contribute to the overall thermal management capabilities of the top cover.

By incorporating this separate second hollow portion, the top cover design allows for a multi-functional structure that can manage gas flow in the first hollow portion while also providing protected space for other battery pack components in the second hollow portion.

The top cover includes at least one vent ingress port and at least one vent outlet aperture. The vent ingress ports allow gases generated within the battery arrays to enter the first hollow portion of the top cover. The vent outlet apertures provide a path for these gases to exit the top cover and vent to the atmosphere.

In some examples, the vent ingress ports may comprise a one-way valve. This one-way valve allows gases to flow from the battery arrays into the first hollow portion of the top cover, but prevents gases or other substances from flowing back into the battery arrays. The one-way valve may be designed to open at a specific pressure, ensuring that gases are only vented when necessary.

Each vent ingress port may comprise a burst region. The burst region is designed to rupture or open when exposed to a certain level of pressure, allowing gases to flow through the vent ingress port and into the first hollow portion of the top cover.

The burst region may include a frangible portion. This frangible portion is a weakened or specially designed area of the burst region that is configured to rupture at a pre-determined pressure level. When the pressure within the battery array reaches this pre-determined level, the frangible portion breaks, creating an opening for gases to flow through the vent ingress port.

The pre-determined pressure level at which the frangible portion ruptures may be selected based on various factors, such as the specifications of the battery cells and the overall design of the battery pack. By carefully selecting this pressure level, the top cover can be designed to vent gases at an appropriate point during a thermal event, helping to manage pressure buildup within the battery pack.

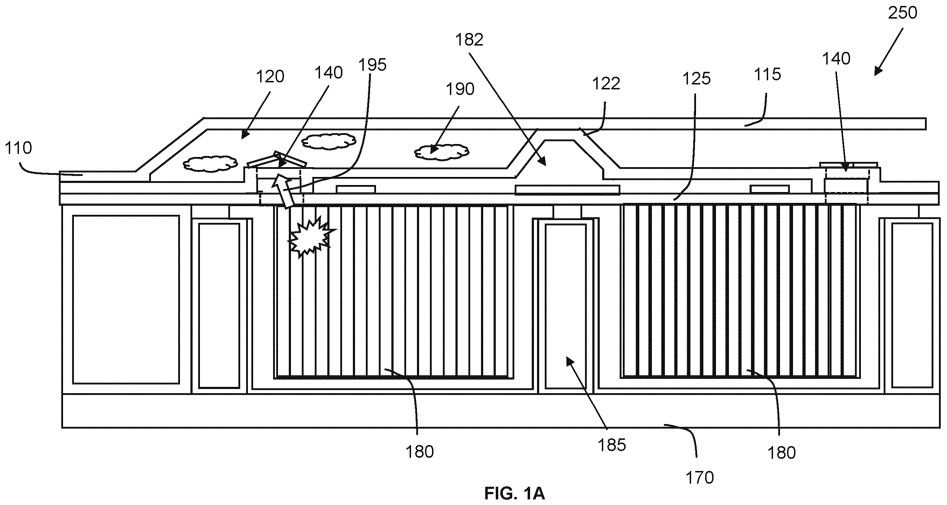

A battery pack 250 includes a top cover 110 configured to be attached to the battery pack 250 and substantially form the top cover of multiple battery arrays 180 within the battery pack 250. FIG. 1A illustrates a section view of the battery pack top cover assembly.

The top cover 110 comprises a first wall 115, a second wall 122, and a third wall 125. The first wall 115 and the second wall 122 are spaced away from one another to form a first hollow portion 120. The second wall 122 and the third wall 125 are spaced away from one another to form a second hollow portion 182.

The first wall 115 forms at least a part of the top cover of each battery array 180 of the multiple battery arrays. The first wall 115 comprises at least one vent ingress port 140 and at least one vent outlet aperture which vents to atmosphere. The first hollow portion 120 provides a fluid flow path between the at least one vent ingress port 140 and the at least one vent outlet aperture. The second hollow portion 182 is not in fluid communication with the first hollow portion 120.

FIG. 1A shows a cold plate 170 positioned at the lower portion of the assembly. A pack cross member 185 provides structural support and allows for controlled fluid flow 190 in the direction indicated by fluid flow direction 195.

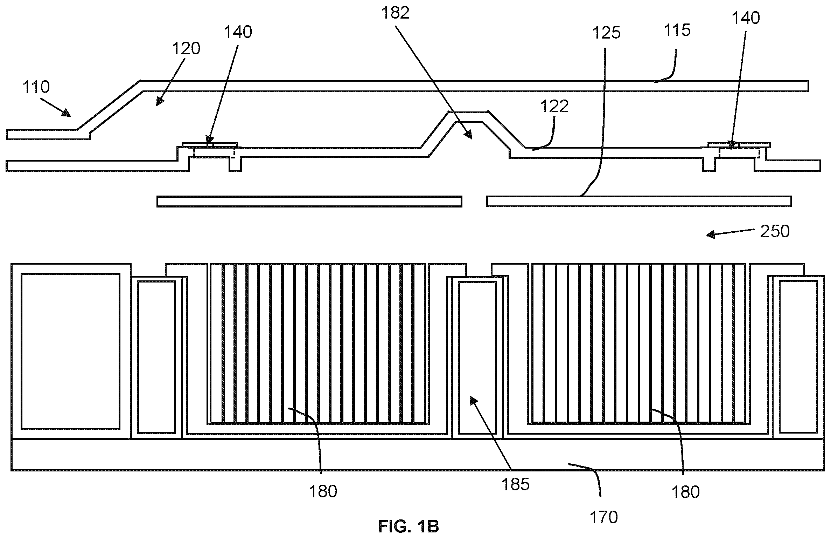

FIG. 1B illustrates another section view of the battery pack assembly, showing the integration of multiple layers in the top cover 110 design. The arrangement of the walls creates separate chambers, with the first hollow portion 120 and second hollow portions 182 providing dedicated spaces for fluid movement. The vent ingress ports 140 enable controlled gas movement between the chambers, while maintaining the structural integrity of the battery pack 250.

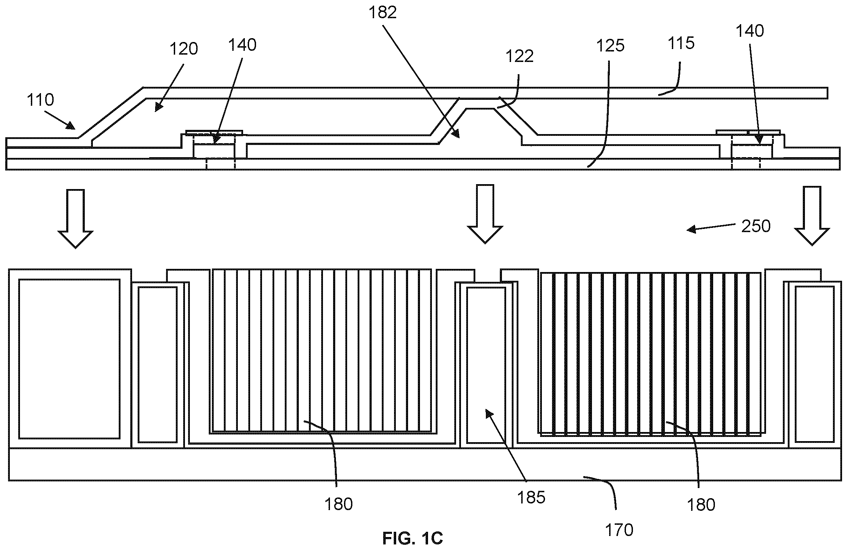

FIG. 1C illustrates a section view of the battery pack assembly similar to FIG. 1B, but with a single vent ingress port 140 shown passing through the structure. The walls are arranged to create separate chambers, with the first hollow portion 120 and second hollow portion 182 providing dedicated spaces.

The first wall 115 can be made of steel, aluminium, or any suitable material The layered configuration of the top cover 110 demonstrates how the first wall 115, second wall 122, and third wall 125 are arranged to create separate spaces while maintaining the overall structure of the battery pack assembly. The design allows for gas management through the designated pathways within the assembly.

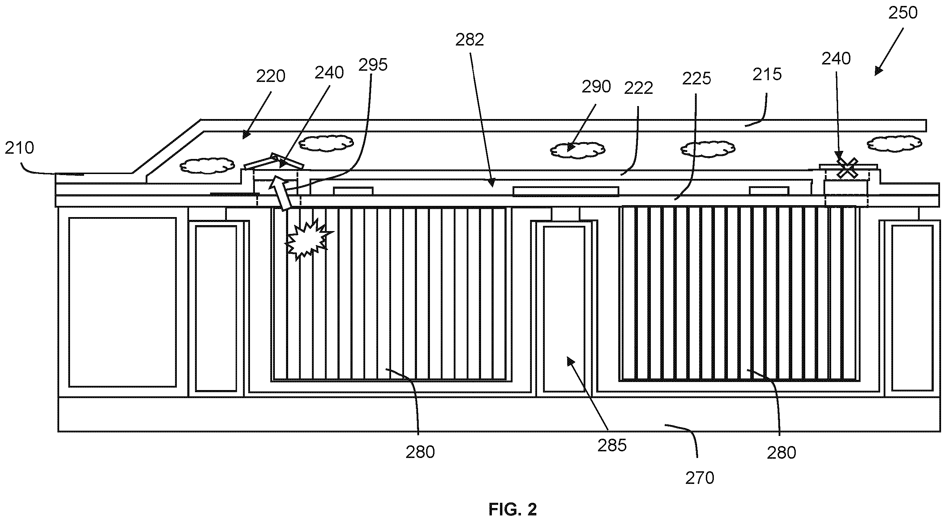

An alternative configuration is shown in FIG. 2. FIG. 2 illustrates a section view of a battery pack assembly showing the integration of multiple walls forming a top cover structure. The battery pack 250 includes a top cover 210 comprising three distinct walls arranged to create separate hollow portions.

The assembly includes a first wall 215 forming the uppermost layer, with a first hollow portion 220 positioned beneath it. A second wall 222 is arranged below the first hollow portion 220, followed by a third wall 225, creating distinct spaces within the assembly.

A vent ingress port 240 passes through the structure. In this configuration, the vent ingress port 240 passes through the second wall 222, which differs from the arrangement shown in FIGS. 1A, 1B, and 1C where the vent ingress port 140 passed through the first wall 115.

A cold plate 270 is positioned at the lower portion of the assembly, with a battery array 280 located above it. A second hollow portion 282 is formed adjacent to the battery array 280. A pack cross member 285 provides structural support to the assembly.

The walls are arranged to create separate chambers, with the first hollow portion 220 and second hollow portion 282 providing dedicated spaces. The fluid flow 290 moves through designated pathways within the assembly, as indicated by the flow direction 295. This fluid flow arrangement is similar to that shown in FIG. 1A, but with a more defined path through the first hollow portion 220.

The second wall 222 may be shaped to separate the first hollow portion 220 into multiple chambers. These multiple chambers of the second hollow portion 282 are not in fluid communication with each other, providing isolation between different sections of the battery pack 250.

Each chamber of the first hollow portion 220 may be substantially aligned with a battery array 280. This alignment allows each battery array 280 to be in fluid communication with a respective chamber of the top cover 210. Additionally, each battery array 280 may include a separate vent ingress port 240 into the respective chamber of the top cover 210, enhancing the individual venting capabilities of each array.

The top cover 210 can be secured to the battery pack 250 using various methods such as adhesive, secure fixings, or welding, depending on the specific design requirements and integration needs of the battery system.

The first wall 215 forms part of the upper surface of the battery pack 250, contributing to the overall structural integrity of the assembly. This configuration demonstrates how the first wall 215, second wall 222, and third wall 225 are arranged to create separate spaces while maintaining the overall structure of the battery pack assembly. The design allows for controlled fluid movement through the designated pathways within the assembly, providing effective management of thermal events and venting processes.

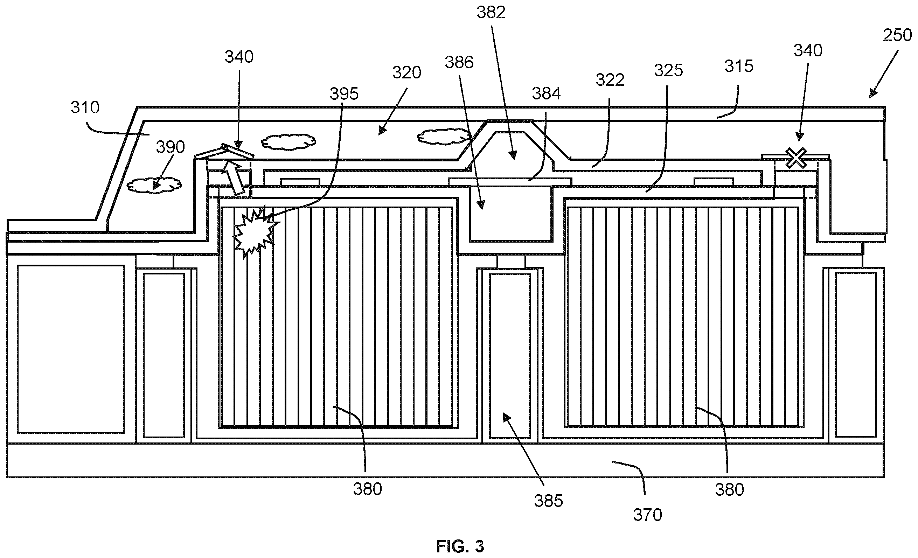

A further arrangement is shown in FIG. 3. FIG. 3 illustrates a section view of a battery pack assembly showing an integrated multi-layer top cover structure. The battery pack 250 includes a top cover 310 comprising three distinct walls arranged to create separate hollow portions.

The assembly includes a first wall 315 forming the uppermost layer, with a first hollow portion 320 positioned beneath it. A second wall 322 is arranged below the first hollow portion 322, followed by a third wall 325, creating distinct spaces within the assembly. This arrangement is similar to the structures shown in previous figures, but with some notable differences.

A vent ingress port 340 passes through the structure, similar to the configurations shown in FIG. 1A, FIG. 1B, and FIG. 2. The vent ingress port 340 may comprise a burst region. In some examples, the burst region comprises a frangible portion. The frangible portion may be configured to rupture at a pre-determined pressure level. In certain configurations, the vent ingress port 340 may comprise a one-way valve.

A cold plate 370 is positioned at the lower portion of the assembly, with a battery array 380 located above it. A second hollow portion 382 is formed adjacent to the battery array 380. These elements are consistent with the arrangements shown in previous figures.

FIG. 3 introduces several new features not present in the earlier figures. A cover layer 384 is shown providing additional structural support to the assembly. This cover layer 384 may enhance the overall integrity of the battery pack 250.

A pack cross member 385 is also present, helping to maintain the assembly's structural integrity. The pack cross member 385 serves a similar function to the pack cross members shown in previous figures.

A unique feature of the assembly shown in FIG. 3 is a channel for busbar or cabling 386 within the assembly. This channel demonstrates how the second hollow portion 382 can be configured to accommodate a busbar or wiring, providing a dedicated space for electrical components within the multi-layer structure.

The figure also depicts a fluid flow 390 path established through the designated pathways within the assembly. This fluid flow 390 is similar to the fluid flow patterns shown in previous figures, illustrating the consistent design principle of controlled gas management throughout the various configurations.

FIG. 3 uniquely illustrates a thermal event 395 occurring within the structure. This depiction demonstrates how the multi-layer top cover design can manage and contain thermal events within the battery pack 250.

The first hollow portion 320 may contain a burstable fireproof plate for gas venting protection.

The second wall 322 can be shaped to support cells of different shapes and sizes. This flexibility in the second wall 322 design allows for adaptability in battery array 380 configurations within the battery pack 250.

In some examples, opposing surfaces of the second wall 322 and the third wall 325 are coated in a silicate mineral. This coating can provide additional thermal protection and resistance within the battery pack 250 structure.

The walls are arranged to create separate chambers, with the first hollow portion 320 and second hollow portion 382 providing dedicated spaces. The layered configuration demonstrates how the first wall 315, second wall 322, and third wall 325 are arranged to create separate spaces while maintaining the overall structure of the battery pack assembly.

The vent outlet apertures may be positioned at various locations on the top cover to facilitate efficient gas venting. These apertures may be designed with specific shapes or sizes to control the rate of gas flow out of the top cover. In some examples, the vent outlet apertures may also include features such as filters or baffles to prevent debris from entering the top cover while allowing gases to exit.

The top cover of the battery pack integrates closely with the battery arrays to provide effective gas management and structural support. In some examples, the top cover includes an array cover portion that aligns with individual battery arrays within the pack. This alignment allows for targeted gas management and structural support for each array.

The array cover portion may include walls that extend downward to hold cells together within each battery array. These walls can provide structural support and maintain proper cell positioning without the need for additional compressive components within the array itself. By integrating the cell retention function into the top cover, the overall design of the battery pack may be simplified.

In some examples, the array cover portion is designed with flexibility to accommodate different cell sizes. This design approach allows for potential future upgrades or changes to the battery pack without requiring a complete redesign of the entire pack structure. For instance, the array cover portion may be configured to accommodate larger cells if needed, providing a degree of future-proofing for the battery pack design.

The top cover may be designed such that each battery array is in fluid communication with a corresponding chamber within the top cover. This arrangement allows gases generated by a specific array to be directed into a designated space within the top cover structure. In some examples, each battery array may include a separate vent ingress port that leads into its respective chamber in the top cover. This configuration enables individualized gas management for each array within the battery pack.

The integration between the top cover and the battery arrays may also include features to ensure proper sealing and containment of gases. For example, the interface between the array cover portion and the battery arrays may include gaskets, seals, or other mechanisms to prevent gas leakage and ensure that vented gases are directed through the intended pathways within the top cover structure.

By closely integrating the top cover with the battery arrays, the overall design of the battery pack can achieve more efficient gas management, structural support for cells, and flexibility for potential future modifications or upgrades to the battery system.

The top cover of the battery pack integrates multiple components to effectively manage cell venting, control gas flow, and prevent thermal propagation. The top cover comprises three walls: a first wall, a second wall, and a third wall. These walls work together to create separate spaces within the top cover structure, each serving a specific purpose in the gas management system.

The first wall and second wall form a first hollow portion, which serves as the primary pathway for vented gases. This first hollow portion connects vent ingress ports to vent outlet apertures, allowing for controlled movement of gases generated within the battery arrays. The second wall and third wall form a second hollow portion, which may be used to house electrical components such as busbars or wiring, keeping them isolated from the gas flow path.

A burstable fireproof plate may be incorporated into the top cover design for additional gas venting protection. This plate can be secured to the bottom layer of the top cover before the top layer is attached, creating a single assembly that is easy to install on the battery pack. The burstable plate may allow for controlled venting of gases in the event of a thermal incident.

The top cover can be manufactured using various materials, including steel, aluminium, or any suitable material. The choice of material may depend on factors such as weight requirements and thermal properties. The manufacturing process for the top cover may involve an stamping process.

To secure the top cover to the battery pack, various methods may be employed. These methods can include the use of adhesives, secure fixings, or welding techniques. The choice of attachment method may depend on factors such as the materials used in the top cover and battery pack construction, as well as the specific requirements for sealing and structural integrity.

The top cover 110, 210, 310 of the battery pack 250 comprises a multi-layer structure that is consistent across various configurations shown in FIG. 1A, FIG. 1B, FIG. 1C, FIG. 2, and FIG. 3. This multi-layer structure includes a first wall 115, 215, 315, a second wall 122, 222, 322, and a third wall 125, 225, 325. These walls are arranged to create two distinct hollow portions: a first hollow portion 120, 220, 320 between the first wall and the second wall, and a second hollow portion 182, 282, 382 between the second wall and the third wall.

The first wall 115, 215, 315 forms at least a part of the top cover for each battery array 180, 280, 380 within the battery pack 250. This configuration allows for a uniform top surface while providing individual coverage for each array. The first wall includes at least one vent ingress port 140, 240, 340, which facilitates the movement of gases from the battery arrays into the first hollow portion.

The first hollow portion 120, 220, 320 serves as a dedicated space for fluid flow 190, 290, 390. This fluid flow can be directed through the first hollow portion, providing a pathway for gases or other fluids to move from the vent ingress ports to designated outlet areas. The fluid flow direction 195, 295 can be controlled to optimize thermal management within the battery pack.

The second hollow portion 182, 282, 382 is separated from the first hollow portion by the second wall 122, 222, 322. This separation creates a distinct space that can be utilized for various purposes. In some configurations, the second hollow portion can be cooled by a fluid. This cooling capability enhances the thermal management of the battery pack 250, allowing for more efficient heat dissipation from the battery arrays.

The multi-layer structure of the top cover 110, 210, 310 also provides opportunities for additional functionality. For example, the walls of the top cover can be used to hold cells together within the battery arrays 180, 280, 380. This structural support may potentially eliminate the need for separate compressive components in the array, simplifying the overall design and potentially reducing the number of components required.

A cold plate 170, 270, 370 is typically positioned at the lower portion of the assembly, providing a heat sink for the battery arrays. The pack cross member 185, 285, 385 offers structural support to the assembly while also contributing to the fluid flow management within the battery pack.

In some configurations, as shown in FIG. 3, a channel for busbar or cabling 386 is incorporated within the assembly. This channel utilizes the space created by the multi-layer structure to accommodate electrical components, demonstrating the versatility of the design.

The top cover design contributes to thermal management by creating dedicated spaces for fluid flow and potential cooling. The first hollow portion 120, 220, 322 allows for controlled movement of gases or fluids, while the second hollow portion 182, 282, 382 can be utilized for additional cooling if needed. This arrangement helps manage thermal events 395, as depicted in FIG. 3, by providing pathways for heat dissipation and gas evacuation.

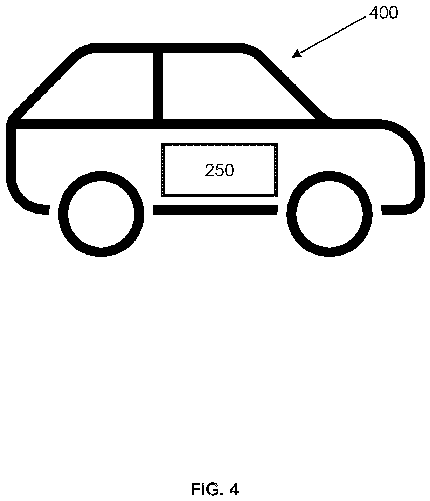

The integration of the battery pack 250 with the multi-layer top cover into a vehicle 400, as shown in FIG. 4, demonstrates how this design contributes to the overall performance of the vehicle. The efficient thermal management and structural design of the top cover allow for optimal placement and operation of the battery pack within the vehicle architecture.

An example of a battery pack including a top cover as described herein is shown in FIG. 4. FIG. 4 illustrates a simplified side orthogonal view of a vehicle 400 incorporating the battery pack 250. The figure shows a basic outline representation of the vehicle 400 with the battery pack 250 positioned within the vehicle's structure.

The battery pack 250 is depicted as a rectangular component integrated into the lower portion of the vehicle 400. This positioning of the battery pack 250 may provide several advantages, such as a low centre of gravity and efficient use of space within the vehicle structure.

The relative size of the battery pack 250 compared to the overall dimensions of the vehicle 400 is substantial, indicating that the battery pack 250 is a significant component of the vehicle's architecture. The battery pack 250 extends across a considerable portion of the vehicle's length and occupies much of the vehicle's undercarriage area.

The integration of the battery pack 250 into the vehicle 400 structure demonstrates how the top cover, as described in previous figures, forms an integral part of the vehicle's design. The top cover of the battery pack 250 may serve as part of the floor of the vehicle 400.

The integration of these components and features in the top cover design allows for effective management of cell venting events. When a cell vents, the gases are directed through the vent ingress ports into the first hollow portion. This controlled pathway helps to isolate the hot gases from sensitive components and other battery arrays.

The separate second hollow portion, formed by the second and third walls, provides a protected space for electrical components. This separation may ensure that these components are not exposed to the hot gases flowing through the first hollow portion.

By combining these elements, the top cover design creates a comprehensive system for managing gas flow and thermal events within the battery pack.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A top cover for a battery pack, the top cover configured to be attached to a battery pack which comprises a plurality of battery arrays and to substantially form the top cover of the battery arrays within the battery pack, wherein:
the top cover comprises a first wall, a second wall, and a third wall;
the first wall and the second wall are spaced away from one another to form a first hollow portion, and the second wall and the third wall are spaced away from one another to form a second hollow portion;
the first wall forms at least a part of the top cover of each battery array of the plurality of battery arrays;
the first wall comprises at least one vent ingress port and at least one vent outlet aperture which vents to atmosphere such that the first hollow portion provides a fluid flow path between the at least one vent ingress port and the at least one vent outlet aperture; and
the second hollow portion is not in fluid communication with the first hollow portion.

2. The top cover of claim 1, wherein the at least one vent ingress port passes through the second wall.

3. The top cover of claim 1 or claim 2, wherein the second wall is shaped such that the first hollow portion is separated into multiple chambers.

4. The top cover of claim 3, wherein the multiple chambers of the second hollow portion are not in fluid communication with each other.

5. The top cover of claim 3 or claim 4, wherein each chamber is substantially aligned with a battery array.

6. The top cover of claim 5, wherein each respective battery array is in fluid communication with a respective chamber of the top cover.

7. The top cover of claim 6, wherein each battery array includes a separate vent ingress port into the respective chamber of the top cover.

8. The top cover of any preceding claim, wherein the second hollow portion is configured to accommodate a busbar or wiring.

9. The top cover of any preceding claim, wherein the at least one vent ingress port each comprise a burst region.

10. The top cover of claim 9, wherein each burst region comprises a frangible portion.

11. The top cover of claim 10, wherein the frangible portion is configured to rupture at a pre-determined pressure level.

12. The top cover of any preceding claim, wherein the at least one vent ingress port comprises a one-way valve.

13. The top cover of any preceding claim, wherein opposing surfaces of the second wall and the third wall are coated in a silicate mineral.

14. A battery pack comprising the top cover of any one of claims 1-13 and at least one battery array.

15. A vehicle comprising the battery pack of claim 14.
